# EUROPEAN PATENT SPECIFICATION

(11) **EP 0 829 750 B1**
(45) Date of publication and mention of the grant of the patent: **05.12.2001**
(21) Application number: 97113837.5
(22) Date of filing: 11.08.1997
(51) Int. Cl.: G03B 21/16, G03B 21/20, G03B 21/22, H04N 9/31

(54) **Front liquid crystal display projector**
Auflichtprojektor mit Flüssigkristallanzeigevorrichtung
Projecteur avec dispositif d'affichage à crystal liquide pour écran réflectif

(30) Priority: 12.09.1996 JP 24176096
(43) Date of publication of application: 18.03.1998
(73) Proprietor: MATSUSHITA ELECTRIC INDUSTRIAL CO., LTD., Kadoma-shi, Osaka 571-0050 (JP)
(72) Inventor: Hashimukai, Masanari, Ibaraki-shi, Osaka 567 (JP); Hoshino, Makoto, Takatsuki-shi, Osaka 569 (JP); Okada, Takehiro, Ibaraki-shi, Osaka 567 (JP); Aono, Shozo, Takatsuki-shi, Osaka 569-11 (JP)
(74) Representative: Kügele, Bernhard

(56) References cited:
- EP-A- 0 773 691
- WO-A-86/07167
- DE-U- 9 209 965
- US-A- 3 920 323
- PATENT ABSTRACTS OF JAPAN vol. 017, no. 320 (P-1558), 17 June 1993 -& JP 05 034825 A (SONY CORP), 12 February 1993
- ANONYMOUS: "Cooling Projection System for Passive Display" IBM TECHNICAL DISCLOSURE BULLETIN, vol. 29, no. 9, February 1987, pages 3930-3931, XP002106054 New York, US

## Description

### TECHNICAL FIELD

The present invention relates to a front liquid crystal display projector.

### BACKGROUND OF THE INVENTION

Recently, along with the advancement of video display device using liquid crystal panel or the like, various types have been developed, including the front liquid crystal display projector.

For example, Japanese Laid-open Patent 5-2215 discloses a projection type liquid crystal display device for decreasing effects of leak light of a light source lamp for the viewer, exhaust hot air of cooling fan, and noise of fan. In the projection type liquid crystal display disclosed in Japanese Laid -open Patent 5-2215, an exhaust port is formed at a position at opposite side of projection direction of the projection lens. In such conventional constitution, however, the problem is that the air heated by the light source lamp is discharged to the viewer side through the exhaust port. Yet, effects for preventing leak light of light source lamp, hot air, and noise to the viewer were not sufficient.

EP-A-0 773 691, which belongs to the prior art according to Art. 54(2) EPC for certain parts of the application and belongs to the prior art according to Art. 54(3)(4) EPC for the remainder of the application, and Patent Abstracts of Japan volume 17, number 320 (P-1558) & JP-A-5 034 825 disclose a front liquid crystal projector wherein an exhaust port is arranged to the front face of a projector in a manner that the discharging direction of the hot exhaust air is almost the same as the outgoing direction of the image light, thereby preventing hot heat discharged from the exhaust port from being discharged toward peripheral equipment or the operator.

US-A-3 920 323 discloses a front liquid crystal display projector comprising exhaust ports arranged in the lateral sides of the projector in a manner that the hot air is discharged laterally from the housing, wherein exhaust ports have light shielding fins serving as a curtain against the light but without blocking the passage of the air.

DE-U-92 09 965 discloses a projector in which exhaust air is emitted from forward-facing exhaust ports in the side of the projector housing. No mention is made about the subject of leak light.

It is hence an object of the invention to present an apparatus of front liquid crystal display projector extremely decreased in effects of leak light of light source lamp, exhaust hot air of cooling fan, and noise of cooling fan to many and unspecified viewers.

### SUMMARY OF THE INVENTION

The invention is defined in claim 1. A front liquid crystal display projector of the invention comprises a housing having a front side, an exhaust port provided in the front side, and a projection opening provided in the front side; an exhaust fan arranged to discharge air in the housing by force through the exhaust port; and an optical block installed in the housing, the optical block having a light source for image projection and a projection lens, whereby an image formed by the optical block is arranged to be projected through the projection opening in a direction substantially normal to the front side. It is characterized in that it further comprises means arranged to emit both leak light of the light source and hot air through the exhaust port in a direction in a range of angle of 15 to 90 degrees to the normal to the front side such that the leak light does not overlap with an image projected through the projection opening.

The optical block may comprise the light source, a colour separator, an image display unit using liquid crystal, and image combining unit, and the projection lens, and the light emitted from the light source may sequentially pass through the colour separator, the image display unit using liquid crystal, the image combining unit, the projection lens, and a colour image may be projected from the projection lens.

The exhaust fan may be installed in said housing.

The exhaust fan may be installed between the light source and the exhaust port, and the exhaust fan may be disposed at an opposite side of a running direction of light of the light source.

The exhaust fan may be installed at an outside of the exhaust port of the housing.

The optical axis of the projection lens and the running direction of light from the light source may be disposed parallel to each other.

The optical block may have a reflection mirror installed between the light source and the projection lens, and the reflection mirror may change the direction of the light emitted from the light source.

The exhaust fan may be installed between the light source and the exhaust port, and the optical axis of the projection lens and the running direction of light from the light source may be disposed parallel to each other.

The exhaust fan may be installed between the light source and the exhaust port, and the optical block may comprise (a) the light source, (b) the projection lens, and (c) a reflection mirror disposed between the light source and the projection lens, and the optical axis of the projection lens and the running direction of light from the light source may be disposed parallel to each other.

The optical block may comprise the light source, the reflection mirror, a light separator, an image display unit using liquid crystal, an image combining unit, and the projection lens, and the light emitted from the light source may sequentially pass through the reflection mirror, the colour separator, the image display unit using liquid crystal, the image combining unit, and the projection lens, so that a colour image is projected from the projection lens.

In this constitution, the leak light of the light source will not get into the eyes of many and unspecified viewers. Moreover, hot air does not reach many and unspecified-viewers. The noise of the exhaust fan reaching the viewers is reduced. A compact and simple optical block is obtained. The effect for raising the temperature in the set main body is enhanced. The apparatus of front liquid crystal display projector having these effects simultaneously is obtained,

### BRIEF DESCRIPTION OF THE DRAWINGS

Fig. 1 (A) is a schematic diagram in a plane direction for explaining a constitution of an apparatus of front liquid crystal display projector in an embodiment of the invention.

Fig. 1 (B) is a block diagram in a front direction of the apparatus of front liquid crystal display projector shown in Fig. 1 (A).

Fig. 2 is a schematic diagram for explaining the configuration of the apparatus of front liquid crystal display projector in the embodiment of the invention and a viewer.

### Reference Numerals

- 1: Light source
- 2: Color separator
- 3: Image display unit
- 4: Image combining unit
- 6: Projection lens
- 6a: Projection opening
- 7: Reflection mirror
- 8: Exhaust fan
- 9: Exhaust port
- 10: Optical block
- 11: Focusing mirror
- 12: Projection screen
- 20: Housing
- 30: Set main body
- 31: Top of set main body
- 32: Side of set main body
- 32A: Side region
- 33: Back of set main body
- 33A: Back region
- 34: Bottom of set main body
- 35: Front of set main body (projection direction)
- L: Projection distance
- X: Direction of leak light
- Y: Region of leak light
- Z: Region of image light

### DESCRIPTION OF THE PREFERRED EMBODIMENT

Referring now to the drawings, an apparatus of front liquid crystal display projector in an embodiment of the invention is described in detail below.

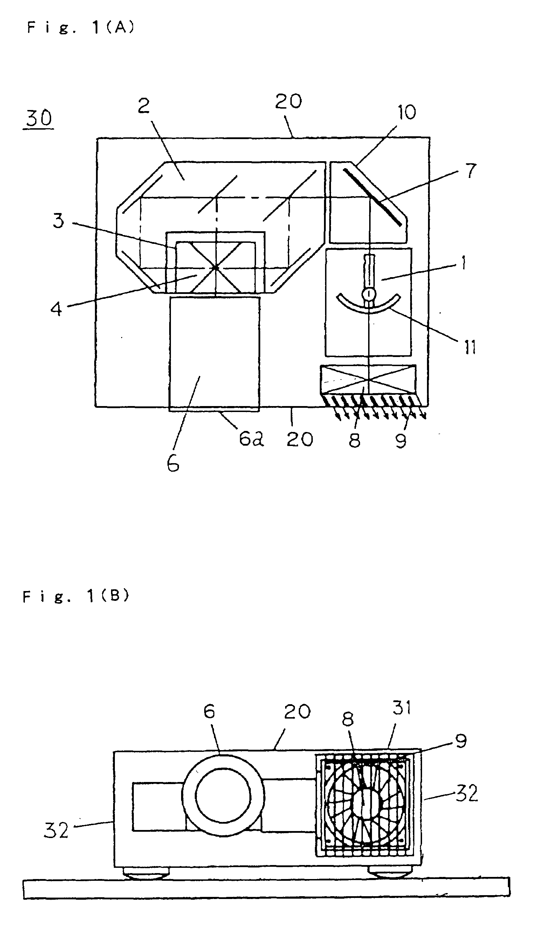

To explain the concept of constitution of the front liquid crystal display projector of the embodiment of the invention, schematic diagrams in the plane direction and front direction are shown in Fig. 1 (A) and Fig. 1 (B). In Fig. 1 (A) and Fig. 1 (B), an optical block 10 and an exhaust fan 8 are installed in a housing 20. The optical block 10 comprises a light source 1 having a focusing mirror 11, a reflection mirror 7, a color separator 2 for separating the color from the light source 10 into red, green and blue, an image display unit 3 for displaying an image having a liquid crystal panel for red, a liquid crystal panel for green, and a liquid crystal panel for blue, an image combining unit 4 for combining the red image, green image, and blue image, and a projection lens 6 for projecting the combined image. The reflection mirror 7 is installed between the light source 1 and color separator 2. Such plural constituent elements are disposed in a U-form in the housing 20.

That is, the light emitted from the light source 10 is changed in direction by the reflection mirror 7, and passes through the color separator 2, image display unit 3, image combining unit 4, and projection lens 6. The housing 20 includes an exhaust port 9 and a projection opening 6a. The light source 1 has a lamp emitting a bright light. The back direction of the light source 1 and the projection direction of the projection lens 6 face the same direction. The projection lens 6 projects an image forward from the projection opening 6a. The light source 1 and projection lens 6 are disposed closely to each other. The exhaust fan is located at the back side of the light source 1. The housing 20 has the exhaust port 9 formed near the exhaust fan 8 in order to discharge the air exhausted from the exhaust fan 8. The exhaust port 9 has a sufficiently large hole for enhancing the air exhaust efficiency. The projection opening of the projection lens 6 and the exhaust port 9 are disposed at the same side of the housing 20. That is, the projection opening of the projection lens 6 and the exhaust port 9 are provided at the first side of the housing 20. The exhaust port 9 having a specified shape is formed so that the direction of the air exhausted from the exhaust port 9 is in a range of 15 degrees to 90 degrees in the direction of the opposite side to the projection opening. Thus, the set main body 30 is composed.

The heat generation by the lamp in the light source 1 is large. Therefore, the inside of the set main body 30 may be heated to high temperature. To prevent from becoming abnormally high temperature due to accumulation of heat, the exhaust fan 8 has a function of discharging hot air in the set main body 30 to prevent temperature rise in the set main body 30. The high temperature heat generated in the light source 1 is exhausted by force from the exhaust port 9 to outside of the set main body 30 by the exhaust fan 8. The light released from the light source 1 is reflected and focused by the focusing mirror 11, and is changed in direction by the reflection mirror 7, and passes sequentially through the image display unit 3 and image combining unit 4, and is magnified and projected on a screen 12 by the projection lens 6. Thus, a color image is displayed on the screen 12. In this constitution, part of the light of the light source 1 is released to outside of the housing 20 as leak light from the exhaust port 9.

In this embodiment, meanwhile, the exhaust fan 8 is disposed inside of the exhaust port 9, but it may be also disposed outside of the exhaust port 9.

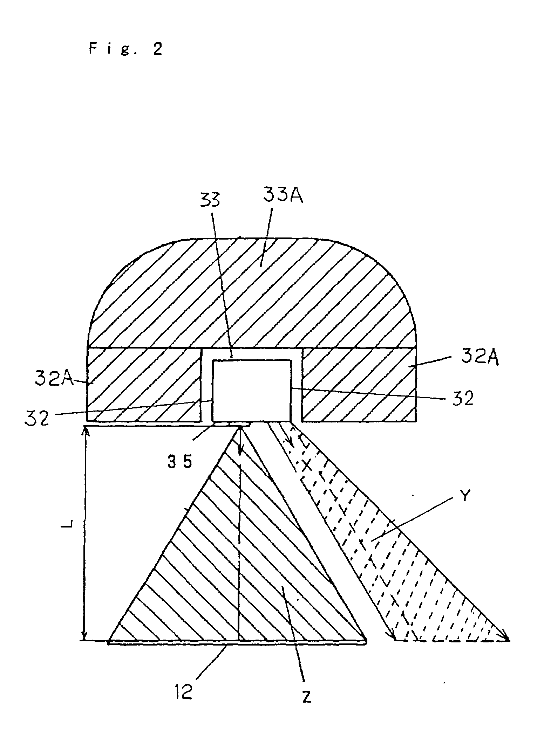

Fig. 2 is a schematic diagram for explaining the configuration of the apparatus of front liquid crystal display projector shown in Fig. 1 (A) and Fig. 1 (B) and a viewer. In Fig. 2, the projection screen 12 is disposed in the direction of front side 35 of the set main body. Usually, when the projection distance L is short, so as not to disturb projection, many and unspecified viewers are positioned in a rear region 33A in the direction of a rear side 33 of the set main body and a lateral region 32A in the direction of a lateral side 32 of the set main body. The image light emitted from the projection opening 6a of the projection lens 6 passes through the range of region "Z" and is displayed on the projection screen 12. Leak light from the light source 1, and hot exhaust air from the exhaust fan 8 are emitted in the direction of arrow "X" from the front side 35 of the set main body, and have effects in a range of region "Y." The direction of arrow "X" is in a range of angle of 15 degrees to 90 degrees to the normal to the front side 35 of the set main body. By setting in such angle range, the region "Z" of the projected image light is not overlapped with the region "Y" of leak light.

In such constitution, the viewer is free from effects of leak light and exhaust air. Moreover, the image projected on the screen 12 is free from effects of leak light. Still more, a larger exhaust port can be formed, so that the effect for preventing temperature rise in the set main body may be enhanced.

By contrast, usually, the set main body is put and used on a desk or floor. Therefore, if the exhaust port is formed in the bottom 34 of the set main body, the temperature in the set main body, and on the desk or floor elevates, which poses a problem in safety. When the exhaust port is formed on the opposite side of the projection direction, the viewer suffers effects of leak light and exhaust air. If the exhaust port is formed on the top of the set main body, the viewer suffers effects of leak light and exhaust air.

In this constitution, leak light of the light source will not get into the eyes of many and unspecified viewers. Hot air does not reach many and unspecified viewers. The noise of the exhaust fan reaching the viewers is reduced. A compact and simple optical block can be obtained. The effect for preventing temperature rise in the set main body is enhanced. The apparatus of front light crystal display projector having such effects simultaneously is obtained.

## Claims

1. A front liquid crystal display projector comprising:
a housing (20) having a front side (35), an exhaust port (9) provided in said front side (35), and a projection opening (6a) provided in said front side (35) ;
an exhaust fan (8) arranged to discharge air in said housing (20) by force through said exhaust port (9); and
an optical block (10) installed in said housing, said optical block (10) having a light source (1) for image projection and a projection lens (6), whereby an image formed by said optical block (10) is arranged to be projected through said projection opening (6a) in a direction substantially normal to said front side (35);
**characterized in that** it further comprises means arranged to emit both leak light of the light source (1) and hot air through the exhaust port (9) in a direction (X) in a range of angle of 15 to 90 degrees to the normal to the front side (35) such that said leak light does not overlap with an image projected through said projection opening (6a).

2. The front liquid crystal display projector of claim 1, further **characterized in that** said optical block (10) comprises said light source, a colour separator (2), an image display unit (3) using liquid crystal, and image combining unit (4), and said projection lens (6), wherein the light emitted from said light source (1) sequentially passes through said colour separator (2), said image display unit (3) using liquid crystal, said image combining unit (4), said projection lens (6), and a colour image is projected from said projection lens (6).

3. The front liquid crystal display projector of claim 1, further **characterized in that** the exhaust fan (8) is installed in said housing (20).

4. The front liquid crystal display projector of claim 1, further **characterized in that** the exhaust fan (8) is installed between said light source (1) and said exhaust port (9), wherein said exhaust fan (8) is disposed at an opposite side of a running direction of light of said light source (1).

5. The front liquid crystal display projector of claim 1, further **characterized in that** the exhaust fan (8) is installed at an outside of said exhaust port (9) of said housing (20).

6. The front liquid crystal display projector of claim 1, wherein the optical axis of said projection lens (6) and the running direction of light from said light source (1) are disposed parallel to each other.

7. The front liquid crystal display projector of claim 1, wherein said optical block (10) has a reflection mirror (11) installed between said light source and said projection lens (6), and said reflection mirror (11) is arranged to change the direction of the light emitted from said light source (1).

8. The front liquid crystal display projector of claim 1, further **characterized in that** the exhaust fan (8) is installed between said light source (1) and said exhaust port (9), wherein the optical axis of said projection lens (6) and the running direction of light from said light source (1) are disposed parallel to each other.

9. The front liquid crystal display projector of claim 1, further **characterized in that** the exhaust fan (8) is installed between said light source (1) and said exhaust port (9), wherein said optical block (10) comprises (a) said light source (1), (b) said projection lens (6), and (c) a reflection mirror (11) disposed between said light source (1) and said projection lens (6), and the optical axis of said projection lens (6) and the running direction of light from said light source (1) are disposed parallel to each other.

10. The front liquid crystal display projector of claim 9, wherein said optical block (10) comprises said light source (1), said reflection mirror (11), a light separator, an image display unit (3) using liquid crystal, an image combining unit (4), and said projection lens (6), and the light emitted from said light source (1) sequentially passes through said reflection mirror (11), said colour separator, said image display unit (3) using liquid crystal, said image combining unit (4), and said projection lens (6), so that a colour image is projected from said projection lens.

## Patentansprüche

1. Auflichtprojektor mit Flüssigkristallanzeige mit:
einem Gehäuse (20) mit einer Vorderseite (35), einer in der benannten Vorderseite (35) vorgesehenen Abluftöffnung (9) und einer in der benannten Vorderseite (35) vorgesehenen Projektionsöffnung (6a);
einem Abluftventilator (8), so angeordnet, Luft im benannten Gehäuse (20) zwangsläufig durch die benannte Abluftöffnung (9) abzugeben; und
einer in dem benannten Gehäuse eingebauten optischen Einheit (10), wobei die benannte optische Einheit (10) eine Lichtquelle (1) für Bildprojektion und eine Projektionslinse (6) hat und ein von der benannten optischen Einheit (10) gestaltetes Bild so angeordnet ist, dass es in einer zur benannten Vorderseite (35) im wesentlichen normalen Richtung durch die benannte Projektionsöffnung (6a) projiziert wird;
**dadurch gekennzeichnet, dass** er weiter Mittel umfasst, die so angeordnet sind, dass sowohl Streulicht der Lichtquelle (1) als auch Heissluft durch die Abluftöffnung (9) in einer Richtung (X) in einem Winkelbereich von 15 bis 90 Grad zur Normalen zur Vorderseite (35) ausgesandt wird, so dass das benannte Streulicht sich nicht mit einem durch die benannte Projektionsöffnung (6a) projizierten Bild überschneidet.

2. Auflichtprojektor mit Flüssigkristallanzeige des Anspruchs 1, weiter **dadurch gekennzeichnet, dass** die benannte optische Einheit (10) die benannte Lichtquelle, einen Farbenseparator (2), eine Flüssigkristall benutzende Bildanzeigeneinheit (3) und eine Bildmischeinheit (4) sowie die benannte Projektionslinse (6) umfasst, wobei das von der benannten Lichtquelle (1) ausgesendete Licht nacheinander den benannten Farbenseparator (2), die benannte Flüssigkristall benutzende Bildanzeigeneinheit (3), die benannte Bildmischeinheit (4) und die benannte Projektionslinse (6) durchläuft und ein Farbild von der benannten Projektionslinse (6) projiziert wird.

3. Auflichtprojektor mit Flüssigkristallanzeige des Anspruchs 1, weiter **dadurch gekennzeichnet, dass** der Abluftventilator (8) in dem benannten Gehäuse (20) montiert ist.

4. Auflichtprojektor mit Flüssigkristallanzeige des Anspruchs 1, weiter **dadurch gekennzeichnet, dass** der Abluftventilator (8) zwischen der benannten Lichtquelle (1) und der benannten Abluftöffnung (9) eingebaut ist, wobei der benannte Abluftventilator (8) an einer entgegengesetzten Seite der Laufrichtung des Lichts von der benannten Lichtquelle (1) angeordnet ist.

5. Auflichtprojektor mit Flüssigkristallanzeige des Anspruchs 1, weiter **dadurch gekennzeichnet, dass** der Abluftventilator (8) an der Aussenseite der benannten Abluftöffnung (9) des benannten Gehäuses (20) montiert ist.

6. Auflichtprojektor mit Flüssigkristallanzeige des Anspruchs 1, worin die optische Achse der benannten Projektionslinse (6) und die Laufrichtung des Lichts von der benannten Lichtquelle (1) parallel zueinander angeordnet sind.

7. Auflichtprojektor mit Flüssigkristallanzeige des Anspruchs 1, worin die benannte optische Einheit (10) einen zwischen der benannten Lichtquelle und der benannten Projektionslinse (6) montierten Reflexionsspiegel (11) hat und der benannte Reflexionsspiegel (11) so angeordnet ist, dass er die Richtung des von der benannten Lichtquelle (1) ausgesendeten Lichts verändert.

8. Auflichtprojektor mit Flüssigkristallanzeige des Anspruchs 1, weiter **dadurch gekennzeichnet, dass** der Abluftyentilator (8) zwischen der benannten Lichtquelle (1) und der benannten Abluftöffnung (9) montiert ist, worin die optische Achse der benannten Projektionslinse (6) und die Laufrichtung des Lichts von der benannten Lichtquelle (1) parallel zueinander angeordnet sind.

9. Auflichtprojektor mit Flüssigkristallanzeige des Anspruchs 1, weiter **dadurch gekennzeichnet, dass** der Abluftventilator (8) zwischen der benannten Lichtquelle (1) und der benannten Abluftöffnung (9) montiert ist, worin die benannte optische Einheit (10) a) die benannte Lichtquelle (1), b) die benannte Projektionslinse (6) und c) einen zwischen der benannten Lichtquelle (1) und der benannten Projektionslinse (6) angeordneten Reflexionsspiegel (11) umfasst und worin die optische Achse der benannten Projektionslinse (6) und die Laufrichtung des Lichts von der benannten Lichtquelle (1) parallel zueinander angeordnet sind.

10. Auflichtprojektor mit Flüssigkristallanzeige des Anspruchs 9, worin die benannte optische Einheit (10) die benannte Lichtquelle (1), den benannten Reflexionsspiegel (11), einen Lichtseparator, eine Flüssigkristall benutzende Bildanzeigeneinheit (3), eine Bildmischeinheit (4) und die benannte Projektionslinse (6) umfasst, und worin das von der benannten Lichtquelle (1) ausgesendete Licht nacheinander den benannten Reflexionsspiegel (11), den benannten Farbenseparator, die benannte Flüssigkristall benutzende Bildanzeigeneinheit (3), die benannte Bildmischeinheit (4) und die benannte Projektionslinse (6) durchläuft, so dass ein Farbbild von der benannten Projektionslinse projiziert wird.

## Revendications

1. Projecteur d'affichage à cristaux liquides par l'avant comprenant :
un boîtier (20) comportant une face avant (35), un orifice de refoulement (9) ménagé dans ladite face avant (35), et une ouverture de projection (6a) ménagée dans ladite face avant (35),
un ventilateur de refoulement (8) agencé pour rejeter de l'air dans ledit boîtier (20) de façon forcée par l'intermédiaire dudit orifice de refoulement (9), et
un bloc optique (10) installé dans ledit boîtier, ledit bloc optique (10) comportant une source de lumière (1) destinée à la projection d'une image et un objectif de projection (6), d'où il résulte qu'une image formée par ledit bloc optique (10) est agencée de façon à être projetée au travers de ladite ouverture de projection (6a) dans une direction sensiblement normale à ladite face avant (35),
**caractérisé en ce qu'**il comprend en outre un moyen agencé pour émettre à la fois la lumière de fuite de la source de lumière (1) et de l'air chaud au travers de l'orifice de refoulement (9) dans une direction (X) dans une plage d'angles de 15 à 90 degrés par rapport à la normale à la face avant (35) de sorte que ladite lumière de fuite ne chevauche pas une image projetée au travers de ladite ouverture de projection (6a).

2. Projecteur d'affichage à cristaux liquides par l'avant selon la revendication 1, **caractérisé en outre en ce que** ledit bloc optique (10) comprend ladite source de lumière, un séparateur de couleur (2), une unité d'affichage d'image (3) utilisant des cristaux liquides, et une unité de combinaison d'image (4), et ledit objectif de projection (6), dans lequel la lumière émise à partir de ladite source de lumière (1) passe successivement par ledit séparateur de couleur (2), ladite unité d'affichage d'image (3) utilisant les cristaux liquides, ladite unité de combinaison d'image (4), ledit objectif de projection (6), et une image en couleur est projetée à partir dudit objectif de projection (6).

3. Projecteur d'affichage à cristaux liquides par l'avant selon la revendication 1, **caractérisé en outre en ce que** le ventilateur de refoulement (8) est installé dans ledit boîtier (20).

4. Projecteur d'affichage à cristaux liquides par l'avant selon la revendication 1, **caractérisé en outre en ce que** le ventilateur de refoulement (8) est installé entre ladite source de lumière (1) et ledit orifice de refoulement (9), dans lequel ledit ventilateur de refoulement (8) est disposé au niveau d'une face opposée à une direction de propagation de la lumière de ladite source de lumière (1).

5. Projecteur d'affichage à cristaux liquides par l'avant selon la revendication 1, **caractérisé en outre en ce que** le ventilateur de refoulement (8) est installé au niveau de l'extérieur dudit orifice de refoulement (9) dudit boîtier (20).

6. Projecteur d'affichage à cristaux liquides par l'avant selon la revendication 1, dans lequel l'axe optique dudit objectif du projection (6) et la direction de propagation de la lumière provenant de ladite source de lumière (1) sont disposés parallèlement l'un à l'autre.

7. Projecteur d'affichage à cristaux liquides par l'avant selon la revendication 1, dans lequel ledit bloc optique (10) comporte un miroir de réflexion (11) installé entre ladite source de lumière et ledit objectif de projection (6), et ledit miroir de réflexion (11) est agencé pour modifier la direction de la lumière émise à partir de ladite source de lumière (1).

8. Projecteur d'affichage à cristaux liquides par l'avant selon la revendication 1, **caractérisé en outre en ce que** le ventilateur de refoulement (8) est installé entre ladite source de lumière (1) et ledit orifice de refoulement (9), dans lequel l'axe optique dudit objectif de projection (6) et la direction de propagation de la lumière provenant de ladite source de lumière (1) sont disposés parallèlement l'un à l'autre.

9. Projecteur d'affichage à cristaux liquides par l'avant selon la revendication 1, **caractérisé en outre en ce que** le ventilateur de refoulement (8) est installé entre ladite source de lumière (1) et ledit orifice de refoulement (9), dans lequel ledit bloc optique (10) comprend (a) ladite source de lumière (1), (b) ledit objectif de projection (6) et (c) un miroir de réflexion (11) disposé entre ladite source de lumière (1) et ledit objectif de projection (6), et l'axe optique dudit objectif de projection (6) et la direction de propagation de la lumière provenant de ladite source de lumière (1) sont disposés parallèlement l'un à l'autre.

10. Projecteur d'affichage à cristaux liquides par l'avant selon la revendication 9, dans lequel ledit bloc optique (10) comprend ladite source de lumière (1), ledit miroir de réflexion (11), un séparateur de lumière, une unité d'affichage d'image (3) utilisant des cristaux liquides, une unité de combinaison d'image (4), et ledit objectif de projection (6), et la lumière émise à partir de ladite source de lumière (1) passe successivement par ledit miroir de réflexion (11), ledit séparateur de couleur, ladite unité d'affichage d'image (3) utilisant des cristaux liquides, ladite unité de combinaison d'image (4), et ledit objectif de projection (6), de sorte qu'une image en couleur est projetée à partir dudit objectif de projection.
